# EUROPÄISCHE PATENTSCHRIFT

(11) **EP 0 398 256 B1**
(45) Veröffentlichungstag und Bekanntmachung des Hinweises auf die Patenterteilung: **27.12.1996**
(21) Anmeldenummer: 90109148.8
(22) Anmeldetag: 15.05.1990
(51) Int. Cl.: A22B 5/08

(54) **Schlachttier-Trocknungs-oder Reinigungsvorrichtung**
Apparatus for drying and cleaning of carcasses
Installation de séchage et de nettoyage d'animaux abattus

(30) Priorität: 19.05.1989 DE 3916303
(43) Veröffentlichungstag der Anmeldung: 22.11.1990
(73) Patentinhaber: Banss Maschinenfabrik GmbH & Co. KG, D-35216 Biedenkopf (DE)
(72) Erfinder: Runkel, Gerhard, D-6341 Angelburg-Gönnern (DE); Henkel, Heinz, D-3563 Dautphetal-Friedensdorf (DE); Schreiber, Helmut, D-8750 Aschaffenburg (DE); Weigel, Wilfried, D-3563 Dautphetal-Friedensdorf (DE)
(74) Vertreter: Klunker . Schmitt-Nilson . Hirsch

(56) Entgegenhaltungen:
- FR-A- 1 604 414
- FR-A- 2 078 095
- FR-A- 2 243 645
- GB-A- 1 082 063
- GB-A- 1 178 019
- GB-A- 1 544 527
- US-A- 3 925 845

## Beschreibung

Die Erfindung bezieht sich auf eine Schlachttier-Trockungs-oder Reinigungsvorrichtung für hängend weiterbewegte Schlachttiere, insbesondere Schweine, nach dem Enthaaren entsprechend dem Oberbegriff von Anspruch 1.

Eine derartige Vorrichtung ist aus der FR-A-2078095 bekannt.

Bisher hat man für diesen Zweck auch sogenannte Peitschenmaschinen eingesetzt. In diesen wird das jeweilige Schlachttier jeweils von einer Seite her mit Peitschen bearbeitet, die an einer drehend angetriebenen Walze mit aufrechter Achse befestigt sind. Um ein Ausweichen des Schlachttiers unter der Wirkung der Peitschen zu verhindern, sind auf der der Peitschenwalze gegenüberliegenden Seite Führungsrohre vorgesehen, die Schleifspuren und Druckstellen an der Schlachttieroberfläche hinterlassen. Es sind mehrere Peitschenwalzen derart hintereinander angeordnet, daß die Schlachttiere einen mäanderförmigen Weg an die Peitschenwalzen vorbei vollführen. Das Trocknungs- oder Reinigungsergebnis ist nicht in allen Fällen optimal.

Durch Formgebung (Profilierung) und Material der Peitschen ist selbst bei guter Reinigung und Desinfektion nach Schlachtbetrieb ein Keimverbleib und dessen Vermehrung in der schlachtfreien Zeit nicht zu vermeiden.

Der Erfindung liegt die Aufgabe zugrunde, eine Vorrichtung der eingangs genannten Art zu schaffen, die an der Schlachttieroberfläche keine störenden Spuren hinterläßt, ein sehr gutes Trocknungs- oder Reinigungsergebnis vollbringt und besser sterilisierbar ist.

Diese Aufgabe wird durch die Merkmale das Kennzeichnenden Teils von Anspruch 1 gelöst.

Durch die "Bewegungseinrichtung", mit der sich die Bürstenwalzen des Paars aufeinander zu bewegen lassen und die eine Bewegung der Bürstenwalzen des Paars voneinander weg zuläßt, wird eine gründliche und zugleich schonende Reinigung der Schlachttieroberfläche nicht nur an den unmittelbar den Bürstenwalzen zugewandten Seiten, sondern auch an den in Schlachttierbewegungsrichtung mehr nach vorne und nach hinten gewandten Seiten erreicht. Außerdem sind die Bürsten der Bürstenwalzen elastisch verformbar, so daß sich die Bürstenwalzen der Kontur des Schlachttiers gut anpassen. Die Bürstenwalzen bewirken im Vergleich zu Peitschenwalzen einen mehr abstreifenden als einschlagenden Reinigungseffekt. Schließlich lassen sich die Bürstenwalzen selbst zum Beispiel bei der täglichen Beendigung des Schlachtbetriebs leichter und gründlicher reinigen und sterilisieren als die Peitschen von Peitschenwalzen.

In den meisten Fällen ist zwischen der Enthaarungsmaschine und der erfindungsgemäßen Reinigungsvorrichtung noch eine Abflämmvorrichtung zwischengeschaltet, so daß mit der erfindungsgemäßen Reinigungsvorrichtung abgeschlagene, auf der Schlachttieroberfläche liegengebliebene Haare bzw. Borsten sowie Abflämmreste von Haaren bzw. Borsten abgebürstet werden. Eine gleichzeitige Wasserzufuhr zum Wegschwemmen der abgebürsteten Fremdteilchen ist möglich. Direkt hinter der Enthaarungsmaschine wird die erfindungsgemäße Vorrichtung in der Regel als Trocknungsvorrichtung eingesetzt.

Die Ausdrucksweise "Zulassen einer Bewegung der Bürstenwalzen des Paars voneinander weg" soll auch diejenigen Falle umfassen, bei denen die Bürstenwalzen des Paars nach Beginn der Reinigung eines Schlachttiers aktiv voneinander weg bewegt werden.

Die Bürstenwalzen des Paars können im wesentlichen senkrechte oder im wesentlichen waagerechte Rotationsachsen haben. Im Fall waagerechter Rotationsachsen ist es in der Regel erforderlich, daß mehrere Bürstenwalzenpaare übereinander vorgesehen sind und/oder eine, vorzugsweise angetriebene, Verfahrbarkeit der Bürstenwalzen aufwärts und abwärts vorgesehen ist.

Sowohl im Fall waagerechter Bürstenwalzen als auch ganz besonders im Fall aufrechter Bürstenwalzen ist es bevorzugt, in Bewegungsrichtung der Schlachttiere hintereinander mehrere Bürstenwalzenpaare vorzusehen, um eine besonders gründliche Reinigung durchführen zu können. Für die Bewegungseinrichtung sind Federn, pneumatische Zylinder-Kolben-Einheiten und eine oben mit einem derartigen Abstand schwenkbare Aufhängung der Bürstenwalzen des Paars, daß das Paar durch ein hindurchbewegtes Schlachttier gegen die Wirkung der Schwerkraft auseinander bewegt wird und sich nach dem Passieren des Schlachttiers unter der Wirkung der Schwerkraft aufeinander zu bewegt, bevorzugt.

Eine besonders bevorzugte Möglichkeit für die Bewegungen der Bürstenwalzen des Paars aufeinander zu und voneinander weg besteht darin, daß die Bürstenwalzen des Paars jeweils von mindestens einem schwenkbaren Arm getragen sind. Alternativ ist jedoch eine translatorische Bewegung der Bürstenwalzen des Paars quer zur Schlachttierbewegungsrichtung möglich.

Die Bürstenwalzen haben die Tendenz, anhaftendes Wasser nach außen wegzuschleudern. Um ein Benässen der Umgebung der Vorrichtung zu verhindern, kann diese ein Gehäuse aufweisen. Bevorzugt ist es jedoch, die Bürstenwalzen einzeln oder gruppenweise auf der dem Bürstenwalzenspalt abgewandten Seite mit konturierten, d.h. dem Bürstenwalzenumriß mindestens im wesentlichen angepaßten, Spritzschutzblechen zu versehen.

Zum gleichen Zweck ist vorzugsweise im oberen Bereich der Vorrichtung ein Spritzschutzblech mit einem vorzugsweise abgedichteten Schlitz vorgesehen, durch den Schlachttier-Transporthaken hindurchgreifen, wobei eine Förderbahn für die Schlachttier-Transporthaken oberhalb des Spritzschutzblechs verläuft. Auf diese Weise ist verhindert, daß Schmierfett und etwaige andere Verunreinigungen an der Förderbahn durch das in der Vorrichtung herumspritzende Wasser abgewaschen werden und nach unten auf die Schlachttiere gelangen.

Die Erfindung und Ausgestaltungen der Erfindung werden im folgenden anhand von zeichnerisch dargestellten Ausführungsbeispielen noch näher erläutert. Es zeigt:
- Fig. 1: eine Vorrichtung in Draufsicht;
- Fig. 2: die Vorrichtung gemäß Fig. 1 in Seitenansicht bei abgenommener Gehäuseseitenwand;
- Fig. 3: die Vorrichtung gemäß Fig. 1 in Stirnansicht.

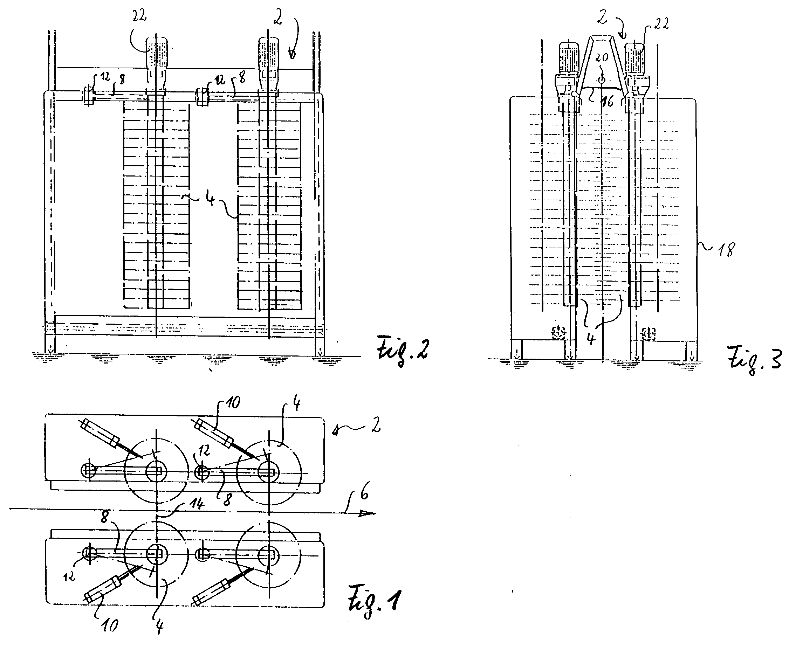

Die in den Fig. 1 bis 3 dargestellte Vorrichtung 2 weist zwei Paare von Bürstenwalzen 4, alle mit vertikaler Rotationsachse, auf. Die Bewegungsrichtung der nicht eingezeichneten Schlachttiere ist in Fig. 1 mit dem Pfeil 6 angedeutet. Jede Bürstenwalze 4 ist an einem oberen, waagerechten Arm 8 aufgehängt, der sich in der in Fig. 1 gezeichneten Zwischenstellung der Bürstenwalzen 4 des entsprechenden Paars im wesentlichen parallel zur Bewegungsrichtung 6 erstreckt. An jeden der Arme 8 ist eine pneumatische Zylinder-Kolben-Einheit 10 angeschlossen, mit der sich der betreffende Arm 8 mitsamt der von ihm getragenen Bürstenwalze 4 schwenkend mindestens in dem die Bürstenwalzen 4 des betreffenden Paars stärker zusammenbringenden Schwenksinn schwenken läßt. Die aufrechte Schwenkachse 12 jedes Arms 8 liegt näher am Eintrittsende der Reinigungsvorrichtung 2 als an deren Austrittsende.

Wenn ausgehend von dem in Fig. 1 gezeichneten Ruhezustand ein Schlachttier von links in die Vorrichtgung 2 eintritt und zu dem ersten Bürstenwalzenpaar gelangt, werden dessen Bürstenwalzen 4 durch die Wirkung des passierenden Schlachttiers unter Auseinanderschwenken ihrer Arme voneinander weg bewegt. Die pneumatischen Zylinder-Kolben-Einheiten 10 lassen diese Bewegung gegen Widerstand zu. Wenn das Schlachttier mit seinem quer zur Bewegungsrichtung 56 breitesten Bereich den Bürstenwalzenspalt 14 passiert hat, werden die beiden Bürstenwalzen 4 durch die Wirkung ihrer Zylinder-Kolben-Einheiten 10 schwenkend aufeinander zu bewegt. Durch die beschriebenen Bewegungen des Bürstenwalzenpaars wird erreicht, daß die in Schlachttierbewegungsrichtung 6 vordere Seitenfläche des Schlachttiers, die Schlachttier-Bauchseite sowie die Schlachttier-Rückseite, die den Bürstenwalzen 4 zugewandt sind, und die in Schlachttierbewegungsrichtung 6 hintere Seitenfläche des Schlachttiers getrocknet oder gereinigt werden. Bei dem anschließenden, zweiten Bürstenwalzenpaar spielen sich die gleichen Vorgänge nochmals ab.

Im einfachsten Fall sind die Zylinder-Kolben-Einheiten 10 sogenannte Gasdruckzylinder, die beim Auseinanderschwenken des betreffenden Armpaars "gespannt" werden und die dadurch gespeicherte Druckenergie beim Zueinanderschwenken des Armpaars wieder abgeben. Es ist aber auch möglich, Zylinder-Kolben-Einheiten 10 einzusetzen, die an eine Druckfluidversorgung angeschlossen sind und infolgedessen einen aktive Auseinanderschwenkbewegung und/oder Zueinanderschwenkbewegung der Arme 8 und damit der Bürstenwalzen 4 des betreffenden Bürstenwalzenpaars leisten können.

Eine weitere bevorzugte, zeichnerisch nicht dargestellte Alternative besteht darin, statt der Zylinder-Kolben-Einheiten 10 mechanische Federn vorzusehen. Außerdem kann man, ob bei Zylinder-Kolben-Einheiten oder bei mechanischen Federn, statt der Schwenkbewegbarkeit der Bürstenwalzen 4 eine entsprechend geführte, translatorische Bewegbarkeit quer zur Schlachttierbewegungsrichtung 6 vorsehen. Schließlich ist es möglich, die Bürstenwalzen 4 an oberen und unteren Armen 8 zu befestigen oder in oberen und unteren Querführungen translatorisch zu führen.

Insbesondere Fig. 3 zeigt, daß oberhalb des Bürstenwalzenspalts 14 ein im wesentlichen waagerechtes Spritzschutzblech 16 angebracht ist und daß die Reinigungsvorrichtung 2 außenseitig - mit Ausnahme der Hindurchbewegungsstrecke für die Schlachttiere - mit einem Gehäuse 18 umgeben ist. Eine Förderbahn 20 für nicht eingezeichnete Transporthaken, an denen die Schlachttiere mit dem Kopf nach unten hängen, verläuft in Bewegungsrichtung 6 oberhalb des Spritzschutzblechs 16. Die Transporthaken greifen durch einen nicht eingezeichneten Längsschlitz im Spritzschutzblech 16 in das Innere der Vorrichtung 2.

In Fig. 2 und 3 erkennt man ferner elektrische Getriebemotoren 22 für den rotierenden Antrieb der Bürstenwalzen 4. Die Motoren 22 sind im wesentlichen in Verlängerung der aufrechten Rotationsachse der jeweiligen Bürstenwalze 4 oben angebracht.

Eine Alternativkonstruktion besteht darin, die Bürstenwalzen 4 etwa mit dem gezeichneten Abstand oben jeweils um eine zur Schlachttierbewegungsrichtung 6 parallele Achse schwenkbar aufzuhängen, ohne daß die Arme 8 und die Zylinder-Kolben-Einheiten 10 vorhanden sind. Durch die passierenden Schlachttiere werden die Bürstenwalzen 4 unter leichter Schrägstellung auseinandergedrückt. Nachdem das jeweilige Schlachttier mit seinem breitesten Bereich den Bürstenwalzenspalt 14 passiert hat, schwenken die beiden Bürstenwalzen 4 des betreffenden Paars unter der Wirkung der Schwerkraft wieder in ihre senkrechte Lage zusammen, wodurch auch die zweite Seitenfläche des betreffenden Schlachttiers gereinigt wird.

## Patentansprüche

1. Schlachttier-Trocknungsvorrichtung oder -Reinigungsvorrichtung für längs einer Förderbahn (20) hängend geförderte Schlachttiere, insbesondere Schweine, nach dem Enthaaren, aufweisend mindestens ein Paar angetrieben rotierbarer Bürstenwalzen (4) mit im wesentlichen senkrechter Rotationsachse, die so angeordnet sind, daß sich die Schlachttiere beim Fördern zwischen den Bürstenwalzen (4) des Paars hindurchbewegen und dabei von diesen bearbeitet werden, gekennzeichnet durch eine Bewegungseinrichtung (10),
(a) die eine Bewegung der Bürstenwalzen (4) des Paars aus einer angenäherten Lage, in der sie die in Förderrichtung (6) weisende Seite des jeweiligen Schlachttiers bearbeiten, voneinander weg zuläßt oder bewirkt,
(b) und die eine Bewegung der Bürstenwalzen (4) des Paars zurück in die angenäherte Lage, in der sie die entgegengesetzt der Förderrichtung (6) weisende Seite des jeweiligen Schlachttiers bearbeiten, bewirkt.

2. Vorrichtung nach Anspruch 1,
dadurch gekennzeichnet,
daß mehrere Bürstenwalzenpaare (4) in Bewegungsrichtung (6) der Schlachttiere hintereinander vorgesehen sind.

3. Vorrichtung nach einem der Ansprüche 1 bis 2,
dadurch gekennzeichnet,
daß die Bewegungseinrichtung Federn als Bewegungselemente aufweist.

4. Vorrichtung nach einem der Ansprüche 1 bis 2,
dadurch gekennzeichnet,
daß die Bewegungseinrichtung pneumatische Zylinder-Kolben-Einheiten (10) als Bewegungselemente aufweist.

5. Vorrichtung nach einem der Ansprüche 1 bis 2,
dadurch gekennzeichnet,
daß zur Schaffung der Bewegungseinrichtung die Bürstenwalzen (4) des Paars oben mit einem derartigen Abstand schwenkbar aufgehängt sind, daß das Paar durch ein hindurchbewegtes Schlachttier gegen die Wirkung der Schwerkraft auseinanderbewegt wird.

6. Vorrichtung nach einem der Ansprüche 1 bis 5,
dadurch gekennzeichnet,
daß die Bürstenwalzen (4) des Paars jeweils von mindestens einem Arm (8) getragen sind und daß die Bewegungen der Bürstenwalzen (4) des Paars aufeinander zu und voneinander weg durch Armschwenkbewegungen erfolgt.

7. Vorrichtung nach einem der Ansprüche 1 bis 6,
dadurch gekennzeichnet,
daS die Bürstenwalzen (4) einzeln oder gruppenweise auf der dem Bürstenwalzenspalt (14) abgewandten Seite mit konturierten Spritzschutzblechen versehen sind.

8. Vorrichtung nach einem der Ansprüche 1 bis 7,
dadurch gekennzeichnet,
daß in ihrem oberen Bereich ein Spritzschutzblech (16) mit einem vorzugsweise abgedichteten Schlitz vorgesehen ist, durch den Schlachttier-Transporthaken hindurchgreifen, und daß eine Förderbahn (20) für die Schlachttier-Transporthaken oberhalb des Spritzschutzblechs (16) verläuft.

## Claims

1. A drying or cleaning apparatus for slaughtered animals, in particular hogs, conveyed in suspended manner along a conveying path (20), subsequent to dehairing, said apparatus comprising at least one pair of brush rollers (4) adapted to be driven in rotatable manner and having a substantially vertical axis of rotation and being disposed such that the slaughtered animals while being conveyed pass between the brush rollers (4) of the pair and are processed by the same,
characterized by a movement means (10)
(a) which permits or effects movement of the brush rollers (4) of the pair away from each other from an approximated position, in which they process the side of the respective slaughtered animal facing in conveying direction (6),
(b) and which effects movement of the brush rollers (4) of the pair back to the approximated position in which they process the side of the respective slaughtered animal facing opposite to the conveying direction (6).

2. An apparatus according to claim 1,
characterized in that a plurality of brush roller pairs (4) is provided one after the other in the direction of movement (6) of the slaughtered animals.

3. An apparatus according to any one of claims 1 to 2,
characterized in that the movement means comprises springs as movement members.

4. An apparatus according to any one of claims 1 to 2,
characterized in that the movement means comprises pneumatic piston and cylinder units (10) as movement members.

5. An apparatus according to any one of claims 1 to 2,
characterized in that, for providing the movement means, the brush rollers (4) of the pair are pivotably suspended at the upper end with such a spacing that the pair is moved apart against the effect of the force of gravity by a slaughtered animal passing therebetween.

6. An apparatus according to any one of claims 1 to 5,
characterized in that the brush rollers (4) of the pair are each supported by at least one arm (8) and in that movement of the brush rollers (4) of the pair toward and away from each other is effected by pivotal movements of the arms.

7. An apparatus according to any one of claims 1 to 6,
characterized in that the brush rollers (4) are individually or in groups provided with contoured splash guard sheets on the side facing away from the brush roller gap (14).

8. An apparatus according to any one of claims 1 to 7,
characterized in that in the upper portion thereof there is provided a splash guard sheet (16) having a preferably sealed slot through which conveying hooks for slaughtered animals extend, and in that a conveying path (20) for the conveying hooks for slaughtered animals extends above the splash guard sheet (16).

## Revendications

1. Dispositif de séchage ou dispositif de nettoyage d'animaux abattus, pour des animaux abattus transportés suspendus, le long d'une piste de transport (20), en particulier des porcs, après ébourrage, présentant au moins une paire de rouleaux porte-soies (4), susceptibles de tourner et entraînés, avec un axe de rotation sensiblement vertical, les rouleaux étant disposés de manière que les animaux abattus passent, lors du transport, entre les rouleaux porte-soies (4) de la paire et soient alors travaillés par ceux-ci,
caractérisé par un dispositif moteur (10),
(a) qui admet ou provoque un écartament des rouleaux porte-soies (4) de la paire, depuis une position d'approche, dans laquelle ils travaillent la face, tournée dans la direction de transport (6), de l'animal abattu respectif,
(b) et qui provoque un déplacement de rappel en position d'approche des rouleaux porte-soies (4) de la paire, position d'approche dans laquelle ils travaillent la face, opposée à la direction de transport (6), de l'animal abattu respectif.

2. Dispositif selon la revendication 1, caractérisé en ce qu'une pluralité de rouleaux porte-soies (4) est prévue, les uns derrière les autres dans la direction de déplacement (6) des animaux abattus.

3. Dispositif selon l'une des revendications 1 à 2, caractérisé an ce que le dispositif moteur présenta des ressorts faisant office d'éléments moteurs.

4. Dispositif selon l'une des revendications 1 à 2, caractérisé en ce que le dispositif moteur présente des ensembles à piston et cylindre (10) faisant office d'éléments moteurs.

5. Dispositif selon l'une des revendications 1 à 2, caractérisé en ce que, pour constituer le dispositif moteur, les rouleaux porte-soies (4) de la paire sont suspendus pivotants, selon un espacement tel que la paire est soumise à un écartament à l'encontre de l'effet de la gravité, du fait du passage dans celle-ci d'un animal abattu.

6. Dispositif selon l'une des revendications 1 à 5, caractérisé en ce que les rouleaux porta-soies (4) de la paire sont chacun portés par au moins un bras (8) et en ce que les déplacements, l'un vers l'autre ou l'un à l'écart de l'autre, des rouleaux porta-soies (4) de la paire s'effectue au moyen des déplacements de pivotement des bras.

7. Dispositif selon l'une des revendications 1 à 6, caractérisé en ce que les rouleaux porte-soies (4) sont pourvus, individuellement ou par groupes, de tôles de protection anti-projection profilées, placées du côté opposé à l'interstice (14) existant entra les rouleaux porte-soies (4).

8. Dispositif selon l'une des revendications 1 à 7, caractérisé en ce que, dans sa zone supérieure est prévue une tôle de protection anti-projection (16), dotée d'une fente, de préférence isolée de façon étanche, et en ce qu'une piste de transport (20) destinée aux crochets de transport des animaux abattus court au-dessus de la tôle de protection anti-projection (16).
